# EUROPÄISCHE PATENTSCHRIFT

(11) **EP 0 428 890 B1**
(45) Veröffentlichungstag und Bekanntmachung des Hinweises auf die Patenterteilung: **11.01.1995**
(21) Anmeldenummer: 90120370.3
(22) Anmeldetag: 24.10.1990
(51) Int. Cl.: G01L 1/20, G01L 5/00, B60D 1/58

(54) **Anhängerkupplung mit Kraftmessdose**
Trailer coupling with load cell
Dispositif d'attelage de remorque avec boîte dynamométrique

(30) Priorität: 25.10.1989 DE 3935479
(43) Veröffentlichungstag der Anmeldung: 29.05.1991
(60) Teilanmeldung: 91102543.5
(73) Patentinhaber: Pfister GmbH, 86165 Augsburg (DE)
(72) Erfinder: Häfner, Hans Wilhelm, W-8890 Aichach-Walchshofen (DE); Heimbach, Manfred, W-8900 Augsburg (DE)
(74) Vertreter: Kahler, Kurt, Dipl.-Ing.

(56) Entgegenhaltungen:
- EP-A- 0 249 905
- EP-A- 0 302 437
- EP-A- 0 373 334

## Beschreibung

Die Erfindung betrifft eine Anhängerkupplung mit den oberbegrifflichen Merkmalen des Patentanspruchs 1.

Aus der EP-A-0 302 437 ist eine Anhängerkupplung bekannt, in die zur Messung von horizontalen und/oder vertikalen Kräften beim Bremsen und Beschleunigen von Fahrzeuggespannen Kraftmeßzellen integriert sind. In einer weiteren Ausführungsform dieser Anhängerkupplung ist eine Kraftmeßzelle in vertikaler Meßrichtung vorgesehen, um die Stützlast eines Anhängers zu bestimmen. Das Meßsignal der Druck-, Zug- oder Stützkräfte kann dabei einer Steuervorrichtung wie einem Antiblockiersystem zur Optimierung der Fahreigenschaften zugeleitet werden. Obwohl hierbei die Kombinationsmöglichkeit zwischen Kraftmeßzellen für vertikale und horizontale Kräfte angedeutet ist, wird eine derartige Ausführungsform nicht näher beschrieben.

Die Kraftmeßzellen der EP-A-0 302 437 bestehen dabei aus einem Kolben, der in einen mit elastomerem Material gefüllten Ringspalt in ein topfförmiges Gehäuse eintaucht. Die Kupplungsteile der Anhängerkupplung sind dabei derart ausgebildet, daß speziell gestaltete Kupplungsteile nötig sind. Im Falle einer Neuanschaffung der Anhängerkupplung ist die beschriebene Lösung wirtschaftlich, jedoch befindet sich noch eine Vielzahl von Anhängerkupplungen im Einsatz, bei denen die oben beschriebene Kraftmeßzelle nicht anwendbar ist, sofern nicht ein Austausch der gesamten Anhängerkupplung vorgenommen werden soll. Andererseits sollte die in der EP-A-0 302 437 beschriebene Kraftmeßvorrichtung in wirtschaftlicher Weise auch für bereits im Einsatz befindliche Anhängerkupplungen oder als Zusatzausrüstung angewendet werden können, um insbesondere die Steuerungsmöglichkeiten aufgrund des erfaßten Meßsignals der Zug-, Druck- und/oder Stützkräfte nutzen zu können.

Demzufolge liegt der Erfindung die Aufgabe zugrunde, eine einfache und platzsparende Nachrüstmöglichkeit für derartige Anhängerkupplungen unter weitestgehender Verwendung vorhandener Kupplungsteile zu ermöglichen.

Diese Aufgabe wird gelöst durch eine Anhängerkupplung mit den Merkmalen des Patentanspruchs 1.

Durch die Verwendung der an sich bekannten Kraftmeßzelle und deren Anordnung in wenigstens einem der Lagerböcke im Kraftweg zwischen dem Zugfahrzeug und der Zugöse der Sattelkupplung wird einerseits die Übertragung hoher Zugkräfte über die Anhängerkupplung möglich und andererseits eine genaue Kraftmessung der Stütz-, Zug- und/oder Druckkräfte erreicht. Hierdurch ist eine exakte Messung der horizontalen und/oder vertikalen Kräfte möglich, wobei die Norm-Anhängerkupplung ohne wesentliche Änderungen weiterverwendet wird. Somit ergibt sich eine billige, platzsparende und wirtschaftliche Nachrüstmöglichkeit selbst älterer Anhängerkupplungen, um aus den Meßsignalen der Kraftmeßzelle die Fahreigenschaften des Fahrzeuggespannes zu optimieren, insbesondere durch Steuerung der Bremsanlage in Abhängigkeit von dem gemessenen Anhängergewicht und/oder dessen Zug- bzw. Druckkraft auf das Zugfahrzeug Schrägstellungen oder das sog. "Ausbrechen" des Anhängers zu verhindern.

Von besonderem Vorteil ist die Ausführung, bei der sowohl die Zug- und Druckkräfte als auch die Stützkräfte mit einer Dreifach-Kraftmeßzelle erfaßt werden, wobei der oder die Kolben der horizontalen Kraftmeßzelle zugleich als Gehäuse der senkrecht hierzu ausgerichteten Kraftmeßzelle dient bzw. dienen. Damit sind mit einer kompakten, leicht nachzurüstenden Einheit sämtliche auf die Anhängerkupplung wirkenden Zug-, Druck- und Abstützkräfte erfaßbar, so daß alle für eine Antiblockierregelung oder eine Antischlupfregelung relevanten Einflußgrößen erfaßt werden können. Neben der Kraftmessung ist dabei in vorteilhafter Weise zugleich auch die Messung der an der Anhängerkupplung angreifenden Momente möglich.

Weitere vorteilhafte Ausgestaltungen sind Gegenstand der abhängigen Ansprüche und werden anhand eines Ausführungsbeispieles in der nachfolgenden Zeichnung näher erläutert und beschrieben. Es zeigen:
- Fig. 1: eine Draufsicht einer Ausführungsform der Anhängerkupplung in Form einer Sattelkupplung;
- Fig. 2: eine Seitenansicht der Anhängerkupplung gemäß Fig. 1; und
- Fig. 3: eine Schnittdarstellung durch eine Einzelheit der Anhängerkupplung gemäß Fig. 2.

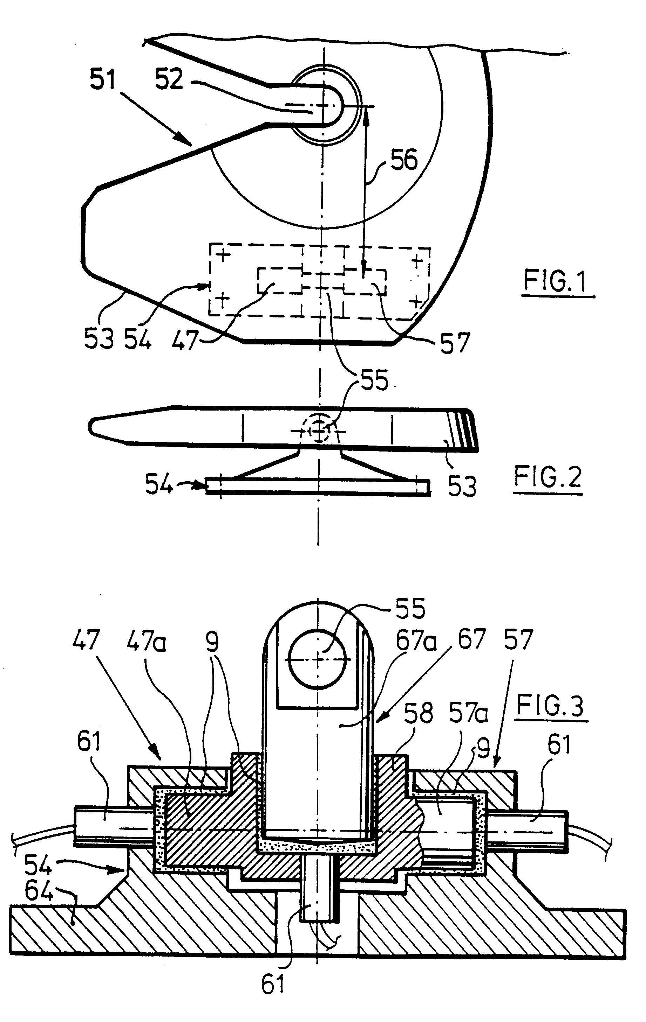

In Fig. 1 und 2 ist eine Sattelkupplung 51 nach DIN 74 081 dargestellt. Eine Zugöse 52 ist hier im Zentrum einer Sattelplatte 53 vorgesehen, die um eine Fahrzeug-Querachse 55 auf zwei seitlichen Lagerböcken 54 schwenkbar gelagert ist.

In Fig. 3 ist eine erfindungsgemäße Ausgestaltung der Anhängerkupplung in Form der Sattelkupplung nach Fig. 1 und 2 dargestellt. Dabei ist ein an der Sattelkupplung 51 austauschbarer Lagerbock 54 vorgesehen, der eine Lagerung für die Querachse 55 aufweist. Die Querachse 55 ist in einem ersten Kolben 67a vorgesehen, der in einem Gehäuse 58 in vertikaler Richtung eingepaßt ist und auf einen unten liegenden Sensor 61 wirkt. Zwischen dem Kolben 67a und dem topfartigen Gehäuses 58 ist ein Raum am Boden des Gehäuses 58 und ein schmaler Ringspalt 9 vorgesehen, der vollständig mit elastomerem Material gefüllt ist (wie punktiert gezeigt). Mit dem elastomeren Material, z.B. einem fest anhaftendem Silikon, steht der Sensor 61, der unterhalb des Bodens des Gehäuses 58 angebracht ist, in Verbindung, so daß bei Beaufschlagung des Kolbens 67a in vertikaler Kraft durch die Stützkraft auf die Anhängerkupplung der Kolben 67a den Drucksensor 61 über das elastomere Material beaufschlagt. Das Meßsignal des Drucksensors 61 kann, wie in der EP-A-0 302 437 dargestellt, an Steuervorrichtungen wie Antiblockiersystemen für das Gespann weitergeleitet werden. Durch die Füllung des engen Ringspaltes 9 mit elastomerem Material hält die Anhängerkupplung 1 selbst hohen Zugbeanspruchungen bei voll beladenem Anhänger stand und ermöglicht zugleich ein feinfühliges Ansprechen des Sensors 61 auf vertikale Kräfte. Neben dieser ersten vertikal ausgerichteten Kraftmeßzelle 67 sind zwei weitere horizontal ausgerichtete Kraftmeßzellen 47 und 57 mit jeweils gleichen Sensoren 61 vorgesehen, die die Zugkräfte und die Druckkräfte erfassen. Hierbei ist vorteilhaft, daß das Gehäuse 58 der ersten Kraftmeßzelle 67 zugleich die Kolben 47a und 57a der zweiten und dritten Kraftmeßzelle 47 und 57 bildet. Somit werden durch ein einstückiges Bauteil 58 innerhalb des Lagerbockes 54 sämtliche für die Regelung von Antiblockiersystemen notwendigen Kräfte erfaßt. Sofern es fertigungstechnisch vorteilhafter ist, können die Kraftmeßzellen 47 und 57 auch voneinander getrennt sein, so daß das vertikale Gehäuse der Kraftmeßzelle praktisch zwischen den beiden horizontalen Kraftmeßzellen 47 und 57 eingespannt und geführt ist. Anstatt zweier horizontaler Kraftmeßzellen 47 und 57 kann auch nur eine einzige vorgesehen sein, die dann durch eine Feder in Höhe der zu erwartenden Kraft vorgespannt ist.

Die Kraftmeßzelle ist in die Anhängerkupplung auf einfache Weise einzubauen, wie hier durch den Austausch eines Lagerbockes 54. Zur Erfassung der Zug-, Druck- und/oder Stützkräfte genügt dabei der Austausch eines Lagerbockes 54 der Sattelplatte 53, jedoch können auch beide Lagerböcke 54 mit Kraftmeßzellen 67, 47 und/oder 57 versehen sein und gegen die herkömmlichen Lagerböcke 54 ausgetauscht werden. Wesentlich ist hierbei, daß ein Großteil der Bauteile der herkömmlichen Anhängerkupplung weiterverwendet werden können und somit auch ältere Zugfahrzeuge mit den Kraftmeßzellen ausgerüstet werden können.

Die in Fig. 3 dargestellte Dreifach-Kraftmeßzelle 67, 47, 57 kann auch bei einer Anhängerkupplung 1 nach Fig. 1 Anwendung finden, wobei die Befestigungsteile des Lagerbockes 54 durch die entsprechenden Anschlußteile, nämlich den Kupplungsflansch 5 und den Anschlußflansch 6 ersetzt würden.

Obwohl es vorteilhaft ist, wenn alle drei Kraftmeßzellen 67, 47, 57 nur in einem Lagerbock 54 angeordnet sind, können beispielsweise auch die Horizontalkräfte durch die Kraftmeßzellen 47 und 57 in einem Lagerbock 54 gemessen werden, während die Kraftmeßzelle 67 für die Stützkraftmessung in dem zweiten Lagerbock 54 angeordnet ist.

Darüberhinaus ist durch diese Anordnung der Kraftmeßzellen seitlich von der zentralen Zugöse 52 neben der Kräftemessung bei Berücksichtigung der Hebellänge 56 (vgl. Fig. 1) auch eine Momentenmessung möglich. Dadurch sind die insbesondere bei Kurvenfahrt und starken Einschlagwinkeln zwischen Zugfahrzeug und Anhänger bzw. Sattelauflieger auftretenden Momente um die Hochachse auf die Anhängerkupplung meßbar und zur Optimierung des Fahrverhaltens heranzuziehen. Beispielsweise können mittels eines dem Fahrzeugtechniker bekannten Antiblockiersystem die rechten oder linken Räder des Gespanns unterschiedlich stark gebremst werden, um ein Einknicken oder eine zu starke Schrägstellung des Gespanns zu verhindern.

Die entsprechenden Grenzwerte sind in einem Speicher einer Mikroprozessorsteuerung abgespeichert, ebenso die in Abhängigkeit von den Meßsignalen einzuleitenden Steuerungs- oder Bremsreaktionen, wie die z. B. in der EP-A-0 302 437 näher erläutert ist.

Es sei darauf hingewiesen, daß bei der Kraftmeßzelle gemäß Fig. 3 zur Ableitung von verhältnismäßig hohen Seitenkräften die Höhe des Spalts 9 größer gewählt wird als der Durchmesser des Kolbens 67a, vorzugsweise sogar größer als der Durchmesser desselben.

Bei dem Ausführungsbeispiel nach den Figuren 1 bis 3 ist es auch möglich, seitliche Kräfte zu messen, die auf den Anhänger wirken und zwar dann, wenn eine Kraftmeßzelle mit analogem Aufbau mit Wirkung in Querrichtung in den Lagerbock oder in den Übergang zwischen der Achse 55 und dem Lagerbock 54 angeordnet wird.

Die Erfindung ist anwendbar auf Anhängerkupplungen insbesondere an Kraftfahrzeuggespannen und bei Eisenbahnwaggons.

## Patentansprüche

1. Anhängerkupplung mit wenigstens einer Kraftmeßzelle zur Messung von Zug-, Druck- und/oder Stützkräften zwischen einem Zugfahrzeug und einem Anhänger, wobei die Kraftmeßzelle einen in einem topfartigen Gehäuse unter Bildung eines mit elastomerem Material gefüllten Ringspaltes angeordneten Kolben aufweist, der auf einen Drucksensor wirkt, dadurch gekennzeichnet, daß die Anhängerkupplung (1) als Sattelkupplung ausgebildet ist, die eine auf Lagerböcken (54) um eine Querachse (55) schwenkbar gelagerte Sattelplatte (53) aufweist, wobei in wenigstens einem der Lagerböcke (54) eine vertikal ausgerichtete Kraftmeßzelle (67) zur Stützkraftmessung und wenigstens eine horizontal ausgerichtete Kraftmeßzelle (47 und/oder 57) zur Messung longitudinaler und/oder lateraler Zug-/Druck-Kräfte angeordnet sind, deren Mittenachsen sich kreuzen.

2. Anhängerkupplung nach Anspruch 1, dadurch gekennzeichnet, daß der Kolben (47a, 57a) für die Messung der Zug- und/oder Druckkraft als Gehäuse (58) für die Kraftmeßzelle (67) zur Stützkraftmessung ausgebildet ist.

3. Anhängerkupplung nach Anspruch 1 oder 2, dadurch gekennzeichnet, daß zwei Kraftmeßzellen (47, 57) für die Zug-/Druckrichtung als Zwillingskraftmeßzelle mit oppositioneller Symmetrie zusammengefaßt sind, wobei in dem Lagerbock (54) ein annähernd zylindrisches Element (58) mit Kolbenenden (47a, 57a) in einem dazu komplementären Raum eines Basiselements (64) des Lagerbocks (54) eingesetzt ist, auf das die horizontalen Kräfte wirken.

4. Anhängerkupplung nach Anspruch 1, dadurch gekennzeichnet, daß die Kraftmeßzellen (47, 57, 67) lediglich in einem Lagerbock (54) angeordnet sind.

5. Anhängerkupplung nach einem der Ansprüche 1 bis 4, dadurch gekennzeichnet, daß die horizontal ausgerichtete(n) Kraftmeßzelle(n) (47, 57) unter Zuordnung des Abstandes (56) zwischen Zugöse (52) und jeweiliger Kraftmeßzelle (47, 57) mit einer Steuereinrichtung zur Momentenerfassung verbunden ist/sind.

## Claims

1. A trailer coupling with at least one load cell for measuring traction forces, pressure forces, and/or supporting forces present between a tracting vehicle and a trailer, wherein the load cell comprises a piston acting on a pressure sensor and disposed in a pot-like housing and forming an annular gap filled with elastomeric material
characterized in that
the trailer coupling (1) is formed as a saddle coupling comprising a saddle plate (53) pivotally supported on a lateral shaft (55) by means of bearing blocks (54), at least one of said bearing blocks (54) having integrated therein a load cell (67) aligned in a vertical direction for measuring any supporting force, and having further arranged therein at least one load cell (47 and/or 57) aligned in a horizontal direction for measuring longitudinal and/or lateral traction/pressure forces whose central axes are intersecting.

2. The trailer coupling of claim 1, characterized in that said piston (47a, 57a) measuring the traction and/or pressure forces is formed as a housing (58) sheltering said load cell (67) measuring the supporting force.

3. The trailer coupling of claim 1 or 2, characterized in that two load cells (47, 57) determined for traction/pressure directions are combined to form a twin load cell designed symmetrically in opposite manner, said bearing block (54) having inserted therein an approximately cylindrical element (58) having piston ends inserted in a recess complementary thereto of a base member (64) of said bearing block (54) with horizontal forces acting thereon.

4. The trailer coupling of claim 1, characterized in that said load cells (47, 57, 67) are merely arranged in one bearing block (54).

5. The trailer coupling of any of claims 1 to 4, characterized in that said horizontally aligned load cell(s) (47, 57) is/are connected to a moment detection controller in association with a distance (56) from a loop traction eye (52) to said respective load cell (47, 57).

## Revendications

1. Dispositif d'attelage comportant au moins une cellule dynamométrique pour mesurer des forces de traction, de pression et/ou d'appui entre un véhicule tracteur et une remorque, la cellule dynamométrique présentant un piston qui est disposé dans un boîtier semblable à un pot en formant une fente annulaire remplie de matériau élastomère, et qui agit sur un capteur de pression, caractérisé en ce que le dispositif d'attelage (1) est réalisé en tant que sellette qui présente une plaque de sellette (53) montée sur des paliers (54) avec faculté de pivotement autour d'un axe transversal (55), une cellule dynamométrique (67) orientée verticalement pour mesurer la force d'appui et au moins une cellule dynamométrique (47 et/ou 57) orientée horizontalement pour mesurer des forces de traction/pression longitudinales et/ou latérales dont les axes centraux se croisent étant disposées dans au moins l'un des paliers (54).

2. Dispositif d'attelage selon la revendication 1, caractérisé en ce que le piston (47a, 57a) pour mesurer la force de traction et/ou de pression est réalisé en tant que boîtier (58) pour la cellule dynamométrique (67) destinée à mesurer la force d'appui.

3. Dispositif d'attelage selon la revendication 1 ou 2, caractérisé en ce que deux cellules dynamométriques (47,57) pour la direction de traction/pression sont regroupées en tant que cellule dynamométrique jumelée à symétrie opposée, sachant que, dans le palier (54), un élément approximativement cylindrique (58) sur lequel agissent les forces horizontales est disposé avec des extrémités en forme de piston (47a, 57a) dans un espace complémentaire d'un élément de base (64) du palier (54).

4. Dispositif d'attelage selon la revendication 1, caractérisé en ce que les cellules dynamométriques (47,57,67) sont uniquement disposées dans un palier (54).

5. Dispositif d'attelage selon l'une des revendications 1 à 4, caractérisé en ce que la (les) cellule(s) dynamométrique(s) (47,57) orientée(s) horizontalement est (sont) reliée(s) à un dispositif de commande pour capter le couple en tenant compte de l'écart (56) entre l'anneau de traction (52) et chacune des cellules dynamométriques (47, 57).
